Europäisches Patentamt

(19) European Patent Office

Office européen des brevets

(11) EP 0 969 283 A1

## (12) EUROPEAN PATENT APPLICATION

(43) Date of publication:
05.01.2000 Bulletin 2000/01

(51) Int Cl.$^7$: G01N 30/86, G01N 27/447

(21) Application number: 98111692.4

(22) Date of filing: 25.06.1998

(84) Designated Contracting States:
AT BE CH CY DE DK ES FI FR GB GR IE IT LI LU
MC NL PT SE
Designated Extension States:
AL LT LV MK RO SI

(71) Applicant: Hewlett-Packard Company
Palo Alto, California 94304 (US)

(72) Inventors:
• Desmartis, Hélène
71069 Sindelfingen (DE)
• Nawracala, Bernd
76199 Karlruhe (DE)

(74) Representative: Harbach, Thomas
c/o Hewlett-Packard GmbH,
Herrenberger Strasse 130
71034 Böblingen (DE)

(54) **A method for processing measuring values**

(57)    A method for processing representations of measuring values, such as chromatograms, electroph-erograms, or spectra comprises the following steps:

a) filtering, by a data processing means, the measuring values by employing a morphological or median filter, wherein said filter uses a structuring element and wherein said filtering step comprises the decomposition of said measuring values into a series of decomposed signal portions, said decomposed signal portions resulting from the use of different structuring elements, respectively, and
b) analysing said decomposed signal portions with regard to any peaks corresponding to peaks in said representation of measuring values. The method permits precise and reproducible localization of peaks and determination of corresponding peak ar-eas, for example in a chromatogram.

Fig. 3

**Description**

The invention relates to a method for processing one-dimensional or two-dimensional representations of measuring values, such as chromatograms or spectra or electropherograms. Such a method can be used, for example, to determine the peaks in a chromatogram representing chromatographically separated sample substances.

BACKGROUND OF THE INVENTION

Spectra and chromatograms are often disturbed by an underlying drifting and noisy baseline. It is then particularly difficult to localize the peaks in the spectrum or chromatogram and to evaluate their area. This leads to inaccurate measuring results. First, errors in the location of a spectral or chromatographic peak may lead to errors in the type of substance being determined. Second, errors in the area of the peaks lead to errors in the quantitative amount of the substances being determined.

In order to cope with the mentioned problems, it is known to use curve-fitting techniques, wherein idealized curves are fitted to the measured spectrum or chromatogram. From these fitted curves, information about the location and the area of the peaks can be derived.

SUMMARY OF THE INVENTION

In view of the prior art, it is an object of the invention to provide a method for processing measuring values which permits a more precise and reproducible localization of peaks and determination of the peak areas.

It is another object of the invention to provide a method for processing measuring values which does not require idealized assumptions about the shapes of the peaks.

According to the present invention, these objects are achieved by a method comprising the following steps:

a) filtering, by a data processing means, the measuring values by employing a morphological or median filter, wherein said filter uses a structuring element and wherein said filtering step comprises the decomposition of said measuring values into a series of decomposed signal portions, said decomposed signal portions resulting from the use of different structuring elements, respectively, and
b) analysing said decomposed signal portions with regard to any peaks corresponding to peaks in said representation of measuring values.

According to the invention, it has been found, surprisingly, that morphological or median filters can be employed advantageously for analyzing one-dimensional or two-dimensional representations of measuring values, in particular chromatograms or spectra. In accordance with an embodiment of the invention, the original measuring values, for example the chromatogram, are decomposed into various signal portions, wherein different decomposed signal portions correspond to different structuring elements used for the decomposition. From the various decomposed signal portions, the precise locations and the areas of the peaks can be determined. The invention can also be used for analyzing electropherograms, i.e., representations of measuring values obtained by an electrophoretic separation process, such as capillary electrophoresis.

In a preferred embodiment for analyzing chromatograms, the structuring element is an elliptical structuring element and the width of the structuring element is changed successively during various iterations of the filtering process, such as to produce different decomposed signal portions.

The method of the invention has several advantages. A first advantage is that only few parameters are needed. According to an embodiment of the invention, a very good approximation of the ideal signal can be achieved with only three estimated parameters: a) minimal height, b) minimal width, and c) maximal width.

A second advantage of the method of the invention is its robustness. The method can treat nearly any kind of signal on the basis of only very few estimated parameters. For example, the method of the invention yields accurate and linear results for signals with nearly any kind of baseline and signal-to-noise ratio. In this connection, the term "accurate" is to be understood in terms of relative error, and the term "linear" is to be understood with regard to variation of the height and area of the peaks. According to the invention, the baseline drift can be eliminated completely, noise is drastically reduced and the evaluation of the peaks is satisfactory.

A third advantage of the method of the invention is that it does not deform the peaks. It substantially preserves the foots, shoulders or any other features of the peaks without any prior assumptions about shapes being required. Unlike the classical applications of mathematical morphology, the present invention does not just use mathematical morphology to recognize patterns or to detect objects, but it actually extracts peaks and thus enables a further, more detailed analysis, such as separation of overlapping peaks, determination of peak areas, and other analyses.

Furthermore, the method of the invention integrates with a filtering part a part for precisely localizing and evaluating the areas of the peaks. Thus, it is not necessary to use additional specialized software and the results become more accurate. The invention thus provides for automatic recognition of the peaks in a chromatogram or spectrum while respecting the areas of the peaks.

The morphological filters (i.e., non-linear filters) used in the invention are representing information in terms of shapes and not in terms of frequency as most of their standard linear counterparts. This leads to a better preservation of sharp edges and renders the method of the invention especially appropriate for peak recognition. Thus it offers in many cases (such as edge detection, noise removal) a better alternative to the classical frequency based approach. Moreover, such filters are easily adjustable to the data dimensions: one-dimensional signals, images or higher dimensional signals can be treated equally well. The mentioned morphological filters offer a great versatility. Due to the possibility to choose the reference form, i.e. the structuring element, and due to the virtually unlimited possibilities of combining basic operators, one can customize the filters to treat a wide range of problems.

An important aspect of the present invention is the discovery that special types of mathematical filters can be used in chromatography or spectrophotometry for signal analysis, yielding unexpected advantages. Some types of mathematical filters are described, in a different context than the present invention, in the following publications:

J. Serra, "Image Analysis and Mathematical Morphology", London (1981); D. Wilson et al., "Morphological Restoration of Atomic Force Microscopy Images", Langmuir 1995, 11, 265-272.

Another prior art method for processing measuring values is known from: G. Pearson, "A General Baseline-Recognition and Baseline-Flattening Algorithm", Journal of Magnetic Resonance, 27, 265-272 (1997).

BRIEF DESCRIPTION OF THE DRAWINGS

In the following, embodiments of the invention will be explained in detail with reference to the drawings.

Figure 1     illustrates some operations used in morphological filters .

Figure 2     shows the effect of morphological operations on a signal.

Figure 3     illustrates results achieved with a method of the invention in analyzing chromatograms.

Figure 4     illustrates the localization of peaks in a chromatogram from the pre-processed signal.

Figure 5     illustrates the principle of a sieve filter.

DETAILED DESCRIPTION OF THE INVENTION

The method of the invention deals with the processing of measuring values, such as a chromatogram produced by a liquid chromatograph. The chromatogram typically consists of a collection of data points representing the variation of a detector signal measured at the outlet of the chromatographic separation column as a function of time. The data points are processed by a digital data processing means which may be integrated with the liquid chromatograph or which may be a separate unit connected to the chromatograph. The measured and the processed chromatograms as well as peak locations and peak areas resulting from the processing can be displayed on a display screen and/or printed out by request of a user. When using the invention in connection with a spectrophotometer, the measuring values comprise a collection of data points representing intensities at different wavelengths. The spectrophotometer can be used, for example, to perform a spectral analysis of the substances eluting from the separation column of a liquid chromatograph or of a capillary electrophoresis device.

The method of the invention makes use of morphological filters. Some morphological filters have been developed in morphological mathematics which is a theory for analyzing data with regard to form and structure. Morphological filters are non-linear filters representing information in terms of shape and not in terms of frequency as most of the standard linear filters. With morphological filters, the analysis is performed with the help of an adapted element, the "structuring element". An introduction to morphological mathematics can be found in the above mentioned textbook by J. Serra. In the following, some terms of morphological mathematics which will be used in the subsequent description will be explained.

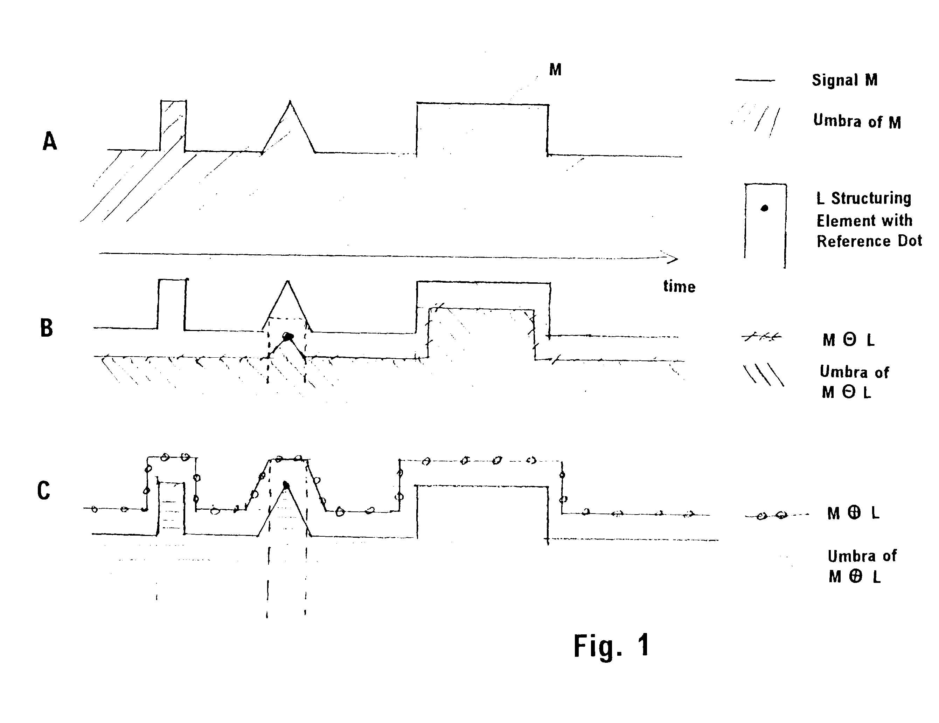

Basic operators in morphological mathematics are dilation $\oplus$, erosion $\ominus$, closing and opening. For the explanation of these operators, reference is now made to Figure 1A-C. In Figure 1A-C, reference sign M denotes the signal which is to be filtered, and L denotes the structuring element with a reference point marked by a dot. The umbra of a signal is defined as all the values "under" the signal surface, i.e. the grey part in Figure 1A.

The dilation $M \oplus L$ of the signal M by the element L is defined by the following formula:

$$M \oplus L = \max_{j \in L} (M(x-j)+L(j)) \qquad (x-j)\ \varepsilon M$$

The dilation operation can be understood graphically (Figure 1C) as placing the reference point of the element L on all points within the umbra of M. L thus describes an output umbra which defines the dilated signal $M \oplus L$.

The erosion of the signal M by the structuring element L , i.e. the operation $M \ominus L$ is described by the following formula:

$$M \ominus L = \min_{j \in L}(M(x + j)-L(j)) \qquad (x+j)\ \varepsilon M$$

The erosion operation can also be understood as moving vertically , for each point, the structuring element L such that it remains entirely in the umbra of M. This is illustrated in Figure 1B.

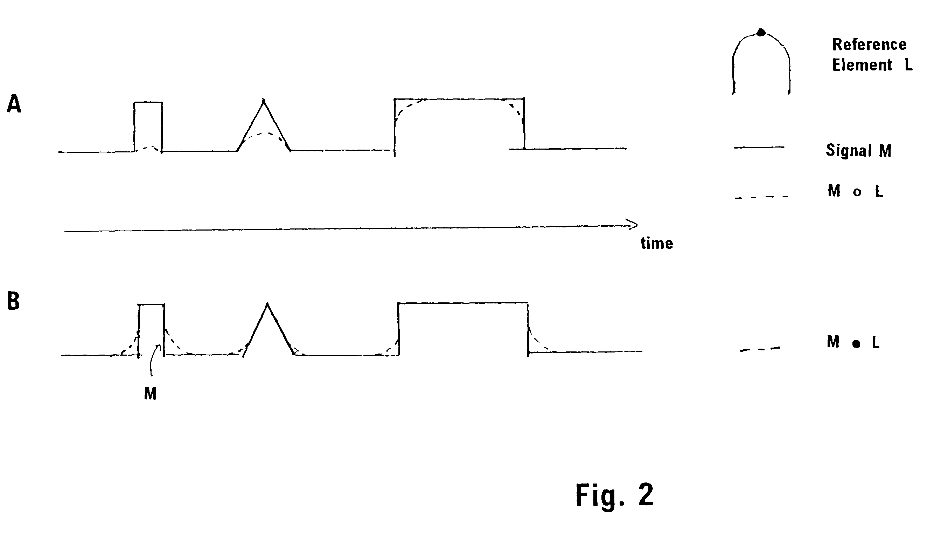

The aforementioned two basic operators can be combined to obtain the closing operator (•) and the opening operator (º) as illustrated in Figures 2A and 2B. M denotes the original signal and L the structuring element L. The dotted curve in Figure 2A is the result of the opening operation, and the dotted curve in Figure 2B is the result of the closing operation. The opening operation as illustrated in Figure 2A consists in first eroding and then dilating the signal M with the same structuring element L:

$$M \text{ (o) } L = M \ominus L \oplus L$$

The closing operation as illustrated in Figure 2B consist in first dilating and then eroding the signal M with the same structuring element L:

$$M \text{ (•) } L = M \oplus L \ominus L.$$

The opening operation can also be illustrated by the following analogy. The operation corresponds to a process wherein one takes an object whose top surface is described by the structuring element, presses the object upwards against the underside surface of the signal and moves it along the signal. Finally, the curve described by the highest positions of the object corresponds to the opened signal. Thus, positive features of the signal that are smaller than the structuring element are eliminated. Figure 2A shows how the structuring element L is pressed, according to the mentioned analogy, from below in the triangular and rectangular elements of the signal.

In case of a spherical structuring element, the opening operation is called "rolling ball algorithm".

In the following, the term "sieve" will be explained. A morphological filter can roughly be considered as a method for extracting all the features from a signal which are, first, either positive or negative and, second, wider than the structuring element. To get a full lengthy description of a signal it is easy to imagine that one may decompose it on various levels, each corresponding to a fixed size of the features. This is called a sieve. It is obtained by the following method:

    1. Filter the signal $S_{n-1}$ with the structuring element $L_n$.
    2. Subtract the filtered signal $S_n$ from the original signal to gain the residues $R_n$.
    3. Increase the width of the structuring element (respecting its form) from one (n = n + 1) and iterate the process.

The sieve based on the filter $\psi_n$ (n being the width of the structuring element) is defined as follows:

$$S_m(A) = \psi_m (... \psi_2 (\psi_1(A) ...)$$

Where A is the original signal. The residues are calculated according to the formula:

$$R_m = S_{m-1} (A) - S_m (A)$$

The collection of residues $(R_i)$ (i = 1,2,...,n) plus possibly the last filtered signal Sn + 1 then represent the signal with its features classified amongst the residues according to their width.

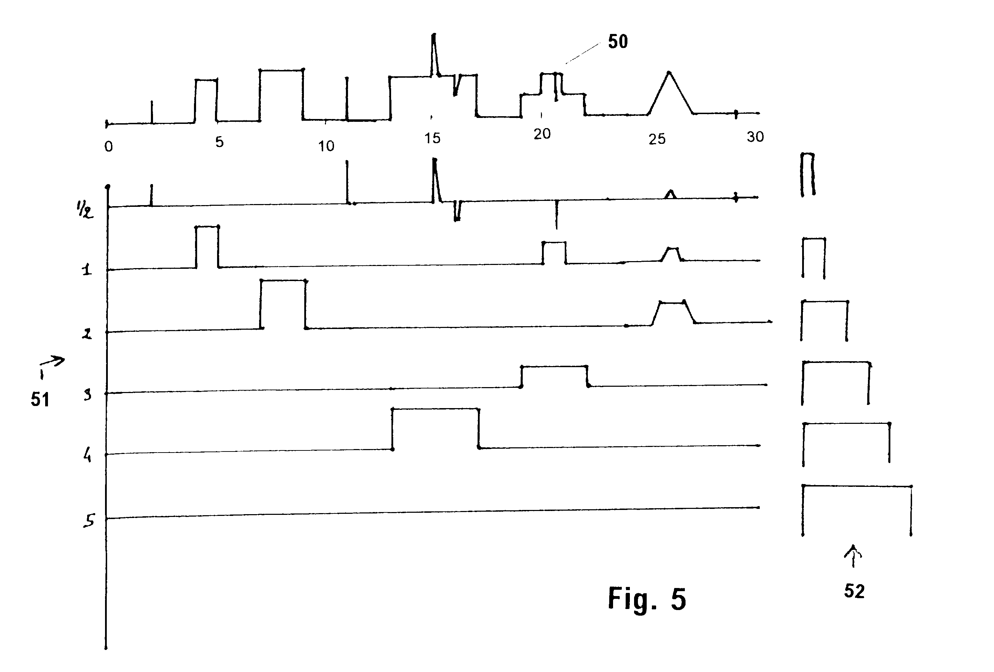

Figure 5 illustrates a sieve filter with an example. The original signal to be filtered is labeled with reference numeral 50. Block 51 depicts a sieve decomposition of the signal 50 using a morphological filter. The various levels ½ , 1, 2, 3, 4, 5 in block 51 are generated by varying the width of the structuring element 52. The widths of the structuring element 52 are schematically illustrated at the right of each level. The width of the structuring element is successively increased from the first to the last level. As can be seen, the original signal 50 is thus decomposed into various levels, from which the peaks in the signal are clearer apparent and from which quantitative analyses of the peaks can be made.

A useful property of sieve filters is the relatively small influence of noise on the final result. Typically, high-frequency (or short-term noise) is for the greatest part concentrated on the very first levels of the sieve, corresponding to the small structuring elements. Therefore, it can be easily removed from the final result, moreover, it does not unduly influence the other levels of the sieve.

The sieve filters are also able to compactly describe and efficiently classify the different features contained in the original signal. In contrast to matched filters or wavelet analysis, these filters are binding the features with edges. That means that peaks, baseline or any noticeable feature would be found in a few number of levels and always at the same place, limited by the edges of the selected feature.

The method of the invention is particularly useful for analyzing chromatograms, as will be described in the following. The data set representing the chromatogram is first submitted to an opening morphological filter with an adapted structuring element. The structuring element is adapted with regard to the minimal height of the expected peak. First, the structuring element is chosen so as to be very small in terms of length. The filter lets pass only the elements contained in the data set which are of larger width than the structuring element. The filtered curve is subtracted from the original data set, thus giving the first residue. The process is then iterated with the elements growing in length. As a result, the residues are describing on the first levels the high-frequency noise, which can also be described as small non-smooth parts of the signal. Then, the chromatographic peaks appear, and on levels corresponding to structuring elements wider than the maximal peak width, drift and baseline of the chromatogram can be found. The useful signal is easily gained back by adding the residues of the middle levels. In this connection, "middle levels" corresponds to a size of the structuring element between the minimal and maximum width of the peak.

In the filtered signal, the locations of the peaks are then roughly estimated with the help of the minimal height parameter. This parameter can typically be chosen by a user such that it is greater than the noise level, but smaller than the smallest peak. Any value in this range leads to good results, but it is preferred to keep some distance from the limits of the range.

The underlying peak area is then evaluated by precisely locating the peaks in the residues of the sieve and adding the involved surface. The peak localization in this embodiment has been performed in two steps, i. e., by an initial coarse localization and a subsequent fine localization, in order to achieve localization faster and more reliably.

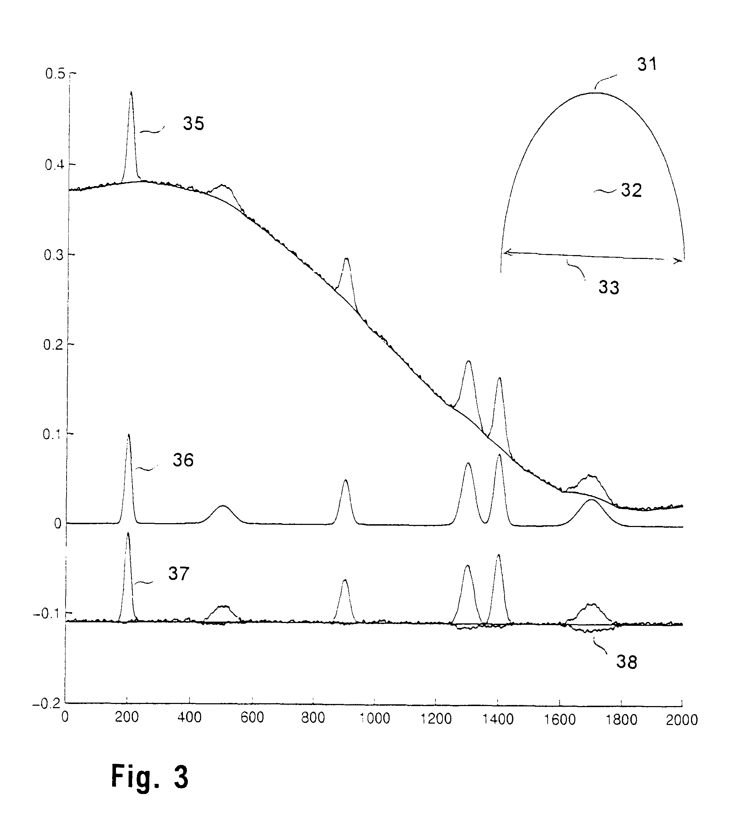

Figure 3 illustrates in more detail the results which can be achieved with the invention in connection with chromatograms. The horizontal axis is the time axis, the indicated numbers are data points. The vertical axis represents the intensity.
The original curve, i.e., the chromatogram 35, is shown at the top of Figure
3. The ideal signal is denoted with reference numeral 36, and the signal resulting from the filtering is denoted with reference numeral 37. Together with the filtered signal 37, a curve 38 is shown , which indicates the deviation between the filtered signal 37 and the ideal signal 36.

In the embodiment illustrated in Figure 3, an elliptical structuring element 31 is used. On the various levels of the sieve, the height 32 of the structuring element is kept constant while the "radius" or width 33 is decreasing throughout the levels of the sieve. An elliptical structuring element has certain advantages for analyzing chromatograms because there is typically a great difference between vertical and horizontal resolution in chromatograms. The operator used in this embodiment is a basic opening operator as defined above.

Processing the levels of the sieve:
The range of levels (i.e., the range of widths of the structuring elements corresponding to each level) used to rebuild the signal is critical to eliminate undesired effects without distorting the peaks. The minimal peak width and the maximal peak width provides the range of levels that are to be selected. The minimal peak width is determined by the resolution of the chromatographic apparatus and the maximal peak width is a parameter to be chosen as being smaller than the wander and baseline variations. The maximal peak width is typically chosen by the user. The other levels typically contain only short term or long term noise effects and can be dumped. Within that range, levels are to be correctly spaced, that means that the increase of the structuring element is dimensioned such that the levels will contain a satisfying image of the peaks. In a practical example, for peaks varying between 24 and 250 data points in length, the "radius" of the elliptical structuring element is made to vary between 10 and 300 data points in steps of 10 for a height corresponding approximately to 10 times the minimal peak height.

A further improvement can be made by introducing a threshold in the levels. This removes minor contributions which are most of the time due to noisy effects. The criterion can be the median value of the considered level, with a threshold value proportional to it.

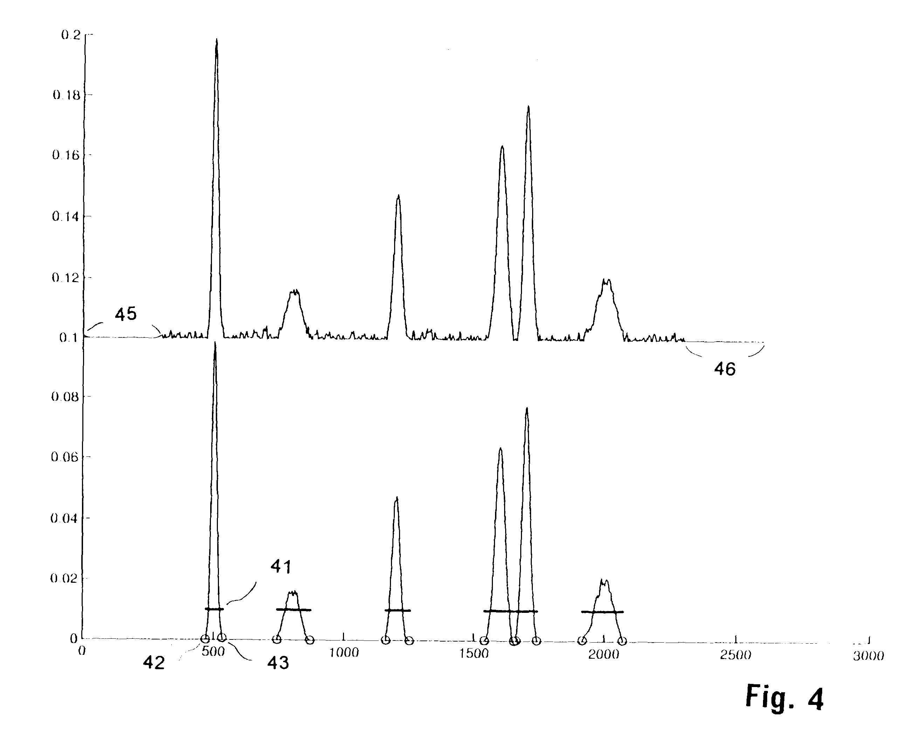

When side effects are present, a further improvement can be achieved by widening the signal beyond its start and end points by extending its end values for the maximal size of the structuring element. This is illustrated in Figure 4, wherein the ranges 45 and 46 represent the extended end portions.

With the sieve method of the invention, the error is minimal and a significant improvement is made in terms of reproducibility and linearity as compared to known filters. Furthermore, the sieve filter is particularly resistant to noise. Other useful features are the flatness and the absence of horizontal offset.

Through the sieve process, access is gained to a lot more information than actually used just for eliminating unwanted noises. In particular, by analyzing the levels, a precise location of the peaks can be extracted. Based on this knowledge, a simple addition of the peaks' values will give a good approximation of the area under the peaks. That means that a complete analysis of the signal is performed, completing the first filtering and avoiding the need of further software.

The following algorithm can be used for integrating the peak areas. For explaining the algorithm, reference will be made to Figure 4, wherein the upper part shows a filtered signal and the lower part shows the extracted peaks.

1. Points that belong to the peaks according to the criterion "value is greater than half the minimal peak height" are marked in the reconstructed signal (Figure 4, threshold line 41).
2. For each marked point, the adjoining areas of non-zero terms are searched in the various levels. The values found are added to form a new signal.
3. The non-zero parts of the newly gained signal are separated, each corresponding to a peak, hereby giving precisely the locations of the peaks. This is illustrated in the lower part of Figure 4 by the dots, such as dots 42 and 43. The underlying area is determined by adding the value of each point of the concerned peak. In the example shown in the lower part of Figure 4, the first peak extend between points 42 and 43. In terms of data points (horizontal axis), this corresponds to a range between data points between number 472 and 534. The values at each of these data points are added to obtain the integrated peak area.

Various modifications to the above described embodiment are possible. For example, different morphological filters having other structuring elements (such as a segment or a Gausssian element) could be used. Also, more elaborated operators can be used. Instead of a morphological filter, a related but non-morphological filter, such as a median filter could be used.

Modifications are also possible with regard to choice and use of the levels. For example, the space and range of the levels may vary. Furthermore, other methods to identify the peaks, for example a gradient method can be used.

**Claims**

1.  A method for processing one-dimensional or two-dimensional data sets representing or derived from measuring values, such as chromatograms, electropherograms, or spectra,
    characterized by the following steps:

    a) filtering, by a data processing means, said data sets (50) by employing a morphological or median filter, wherein said filter uses a structuring element and wherein said filtering step comprises the decomposition of said data sets into a series of decomposed signal portions, said decomposed signal portions (52a, 52b, ...) resulting from the use of different structuring elements, respectively, and
    b) analyzing said decomposed signal portions with regard to any peaks corresponding to peaks in said data sets representing or derived from said measuring values.

2.  A method as in claim 1, comprising a step of determining the positions of said peaks in said decomposed signal portions.

3.  A method as in claim 1 or 2, additionally comprising a step of determining the area of said peaks in said decomposed signal portions.

4.  A method as in any of the preceding claims, wherein said filter is a morphological filter comprising a structuring element and an operator.

5.  A method as in claim 4, wherein said structuring element is an elliptical structuring element.

6.  A method as in claim 4 or 5, wherein said operator is an operator performing an opening operation.

7.  A method as in any of the preceding claims, wherein different decomposed signal portions (52a, 52b, ...) are generated by varying the width of the structuring element in a predetermined way.

**A**

**B**

**C**

M

time

Signal M

Umbra of M

L Structuring
Element with
Reference Dot

M ⊖ L

Umbra of
M ⊖ L

M ⊕ L

Umbra of
M ⊕ L

**Fig. 1**

EP 0 969 283 A1

A

B

M

Reference
Element L

Signal M

M o L

M ● L

time

Fig. 2

EP 0 969 283 A1

**Fig. 3**

EP 0 969 283 A1

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | M. M. SKOLNICK: "Application of Morphological Transformations to the Analysis of Two-Dimensional Electrophoretic Gels of Biological Materials" COMPUTER VISION GRAPHICS AND IMAGE PROCESSING., vol. 35, no. 3, September 1986, pages 306-332, XP002086220 MA US * the whole document * | 1-4,6 | G01N30/86 G01N27/447 |
| X | Q. WANG ET AL.: "Application of median-type filtering to image segmentation in electrophoresis" SPIE BIOMEDICAL IMAGE PROCESSING II, vol. 1450, 1991, pages 47-58, XP002086221 san jose,ca,us * the whole document * | 1 | |
| A,D | D. L. WILSON ET AL.: LANGMUIR, vol. 11, no. 1, January 1995, pages 265-272, XP002086222 * the whole document * | 1 | TECHNICAL FIELDS SEARCHED (Int.Cl.6) G01N G06F |
| A | A. W. MOORE ET AL.: "Median Filtering for Removal of Low-Frequency Background Drift" ANALYTICAL CHEMISTRY., vol. 65, no. 2, 15 January 1993, pages 188-191, XP002086223 COLUMBUS US * the whole document * | 1 | |
| A | US 5 098 536 A (ANDERSON PHILIP D) 24 March 1992 * abstract * | 1 | |

-/--

The present search report has been drawn up for all claims

| Place of search | Date of completion of the search | Examiner |
|---|---|---|
| BERLIN | 30 November 1998 | Brison, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent Office

**EUROPEAN SEARCH REPORT**

Application Number

EP 98 11 1692

page 1 of 2

**European Patent Office**

**EUROPEAN SEARCH REPORT**

Application Number

EP 98 11 1692

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 395 481 A (SPECTRA PHYSICS) 31 October 1990 * abstract * | 1 | |
| | ----- | | |

TECHNICAL FIELDS SEARCHED (Int.Cl.6)

The present search report has been drawn up for all claims

| Place of search | Date of completion of the search | Examiner |
|---|---|---|
| BERLIN | 30 November 1998 | Brison, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 11 1692

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-1998

| Patent document cited in search report | | Publication date | Patent family member(s) | | Publication date |
|---|---|---|---|---|---|
| US 5098536 | A | 24-03-1992 | EP JP | 0497468 A 5099898 A | 05-08-1992 23-04-1993 |
| EP 0395481 | A | 31-10-1990 | JP US | 2297060 A 5121443 A | 07-12-1990 09-06-1992 |